# EUROPÄISCHE PATENTSCHRIFT

(11) **EP 1 008 920 B1**
(45) Veröffentlichungstag und Bekanntmachung des Hinweises auf die Patenterteilung: **31.08.2005**
(21) Anmeldenummer: 99124546.5
(22) Anmeldetag: 09.12.1999
(51) Int. Cl.: G05B 21/02, C02F 1/00

(54) **Verfahren zur Messung von Wasser- und Abwasserparametern**
Process for measuring water and waste water parameters
Procédé de mesure des paramètres de l'eau et des eaux usées

(30) Priorität: 09.12.1998 DE 19857014
(43) Veröffentlichungstag der Anmeldung: 14.06.2000
(73) Patentinhaber: WTW Wissenschaftlich-Technische Werkstätten GmbH & Co. KG, 82362 Weilheim (DE)
(72) Erfinder: Schwab, Ulrich, 82166 Gräfelfing (DE)
(74) Vertreter: Zipse + Habersack

(56) Entgegenhaltungen:
- US-A- 4 382 173
- US-A- 4 544 489
- US-A- 4 626 413
- US-A- 4 660 152
- US-A- 5 177 695

## Beschreibung

Die vorliegende Erfindung betrifft ein Verfahren zur Messung von Wasser- und Abwasserparametern und ein Analysegerät zur Messung von Wasser- und Abwasserparametern.

Bei insbesondere automatischen Analysegeräten steht neben der ständigen Verfügbarkeit der Messung zunehmend der Verbrauch an Chemikalien im Vordergrund, welche die Betriebskosten des Gerätes wesentlich mit beeinflussen. Bei den diskontinuierlich arbeitenden Geräten, die am Markt erhältlich sind, wird der Chemikalienverbrauch dadurch reduziert, daß die Meßintervalle erhöht werden. Auf diese Weise wird jedoch die Verfügbarkeit der Meßwerte drastisch reduziert. So können Spitzen oder kurzzeitige schnelle Schwankungen meßtechnisch verlorengehen. Eine Regelung einer Kläranlage infolge kurzfristiger Schwankungen, zum Beispiel bei Wolkenbrüchen, ist damit nicht mehr möglich.

Die US-A 4,660,152 zeigt ein Verfahren zur Überwachung und Erhaltung einer vorbestimmten Konzentration eines Materials in einem flüssigen Trägermedium. Zum Erhalten der vorbestimmten Konzentration ist eine Zudosierungseinrichtung vorgesehen, die bei festgestelltem Bedarf dem flüssigen Trägermedium eine bestimmte Dosis des Materials zuführt. Um festzustellen, um ein Zudosierungsbedarf vorliegt oder nicht, ist weiterhin eine Überwachungsvorrichtung vorgesehen. Da in dem flüssigen Trägermedium von Zeit zu Zeit Luftblasen auftreten können, kann der Messwert der vorliegenden Materialkonzentration verfälscht werden. Deshalb wird der Unterschied zwischen zwei aufeinanderfolgenden Messpunkten bestimmt und überprüft, ob dieser Unterschied einen bestimmten Schwellwert überschreitet, was dann mit der Anwesenheit von Luftblasen gleichgesetzt wird. Wenn dies der Fall ist, wird die Messfrequenz erhöht, bis der Unterschied wieder unter dem Schwellwert liegt. Dann wird die Messfrequenz wieder auf die normale Frequenz abgesenkt.

Die US-A 4,544,489 zeigt ein Verfahren zur Zugabe von entwässerndem Polymer-Material in einem Abwasserschlamm, wobei ein Viskosimeter zur Steuerung der Zugabe verwendet wird. Das Zeitintervall zwischen aufeinanderfolgenden Viskosimetermessungen kann eingestellt werden, so dass es mit der Abnahme der Zugabegeschwindigkeit des Polymer-Materials abnimmt und mit der Größe der Zunahme der Polymer-Zugabe zunimmt.

Es ist Aufgabe der vorliegenden Erfindung, ein Meßverfahren und ein Analysegerät zu schaffen, die den Verbrauch an Reagenzien und Chemikalien minimieren, ohne meßtechnisch relevante Information zu verlieren.

Die Erfindung wird gelöst durch ein Verfahren gemäß Anspruch 1 und ein Analysegerät Anspruch 6. Vorteilhafte Weiterbildungen der Erfindungen sind Gegenstand der Unteransprüche.

Erfindungsgemäß wird die Differenz der Meßwerte zweier aufeinanderfolgender Messungen durch einen der Zeit zwischen beiden Messungen entsprechenden Wert geteilt. Dies kann durch eine erste Ableitung der Meßwerte nach der Zeit geschehen, oder lediglich durch Verwendung der Meßwertdifferenzen bei konstantem Meßintervall. Ist der Differenzwert bzw. Wert der Ableitung höher, bedeutet dies, daß sich die Meßwerte im Vergleich zur letzten Messung stärker verändert haben. In diesem Fall wird ein kürzeres Intervall bis zur nächsten Messung eingestellt. Ist der Wert niedriger, so bedeutet dies, daß sich die Meßwerte nur wenig geändert haben. Das Pausenintervall kann somit auf einen größeren Wert eingestellt werden. Auf diese Weise ist es möglich, die Meßintervalle an die Änderung der Meßwerte anzupassen. Wenn zum Beispiel schnellere oder kurzzeitigere Schwankungen auftreten, so führt dies zu einer deutlichen Erhöhung der ersten Ableitung der Meßwerte, wodurch dann automatisch entsprechend kürzere Meßintervalle eingestellt werden, so lange, bis die kurzzeitige Änderung wieder zurückgegangen ist und die erste Ableitung wieder kleinere Werte annimmt. Bei nur sehr geringfügigen Änderungen der Meßwerte kann indes ein sehr langes Pausenintervall eingestellt werden.

Somit ist es also möglich, den Verbrauch an Strom als auch an Chemikalien für die Messungen zu minimieren, ohne daß meßtechnisch relevante Information verlorengeht.

Vorzugsweise ist eine Zuordnungsfunktion, zum Beispiel in Art einer Tabelle oder einer mathematischen Funktion in dem Meßgerät gespeichert, durch welche ein bestimmter Wert einer Ableitung gleich einem bestimmten Pausenintervall zugeordnet werden kann. Dieses Steuerungsverfahren ist sehr einfach und ohne große hard- oder softwaretechnischen Aufwand zu realisieren.

Ein Analysegerät zur Durchführung des Verfahrens benötigt eine Differenz- oder Differenzierschaltung, die die Differenz aufeinanderfolgender Messungen bildet und diese Differenz durch einen, dem zeitlichen Abstand der Messungen entsprechenden Wert dividiert. Weiterhin muß eine Vergleichsschaltung vorgesehen sein, um den erhaltenen Differenzwert bzw. Wert der ersten Ableitung mit entsprechenden Werten einer Zuordnungsfunktion zu vergleichen und aus dieser Funktion ein Pausenintervall zur Festlegung des Zeitpunktes der nächsten Messung zu erhalten.

Selbstverständlich kann eine manuelle Einstellung vorgesehen sein, um die auf obige Weise automatisch festgelegten Meßintervalle zu beeinflussen, zum Beispiel zu verringern oder zu vergrößern.

Die erste Ableitung eines Meßwertes drückt sich in dx/dt aus. Inder Regel ist das dC/dt wobei C die gemessene Konzentration eines Wasser- oder Abwasserparameters ist und T die Zeit zwischen den beiden Messungen. Selbstverständlich müssen nicht die letzten beiden Messungen zur Berechnung der ersten Ableitung verwendet werden. Die Ableitung kann aus mehreren Meßpunkten errechnet werden oder es ist auch möglich, nicht die letzten beiden Messungen zur Bildung der ersten Ableitung heranzuziehen. Dies kann entsprechend den individuellen Anforderungen variiert werden. Das Meßverfahren kann insbesondere für die Phosphatbestimmung in einem Belebungsbecken angewandt werden.

Selbstverständlich kann durch das Verfahren ein Grundintervall entsprechend dem Wert der ersten Ableitung verlängert oder verkürzt werden. Es ist nun möglich, das Grundintervall variabel, zum Beispiel für unterschiedliche Tage oder Tageszeiten einzugeben, um auch hierdurch die Abfolge der Messungen zu beeinflussen. Diese Änderung des Grundintervalls kann auch programmgesteuert, d.h. automatisch erfolgen. Das Grundintervall wird dann in der Regel in den Zeiten kürzer gesetzt, in denen stärkere Schwankungen im Abwasser aufkommen oder in der Art des Abwasseraufkommens zu erwarten sind.

In einer sehr günstigen Ausführungsform werden nur die Meßwertdifferenzen für die Beurteilung der Änderung des Meßintervalls herangezogen. Wenn die Meßwertdifferenzen gewisse Unter- bzw. Obergrenzen überschreiten, wird das Meßintervall geändert, so daß die Meßwertdifferenzen mit dem neuen Meßintervall wieder innerhalb der erlaubten Grenzen liegen.

Die Erfindung wird nachfolgend beispielsweise anhand eines bevorzugten Ausführungsbeispiels in Verbindung mit der beigefügten Zeichnung beschrieben. Dieses Ausführungsbeispiel soll nicht als Begrenzung der Erfindung verstanden werden. Es zeigen:
- Fig. 1: eine schematische Zeichnung eines Gerätes zur Messung von Wasser- und Abwasserparametern;
- Fig. 2: Kennlinien, die die Beziehung zwischen der Größe der Änderung aufeinanderfolgender Meßwerte in Beziehung zum Meßintervall beschreiben.

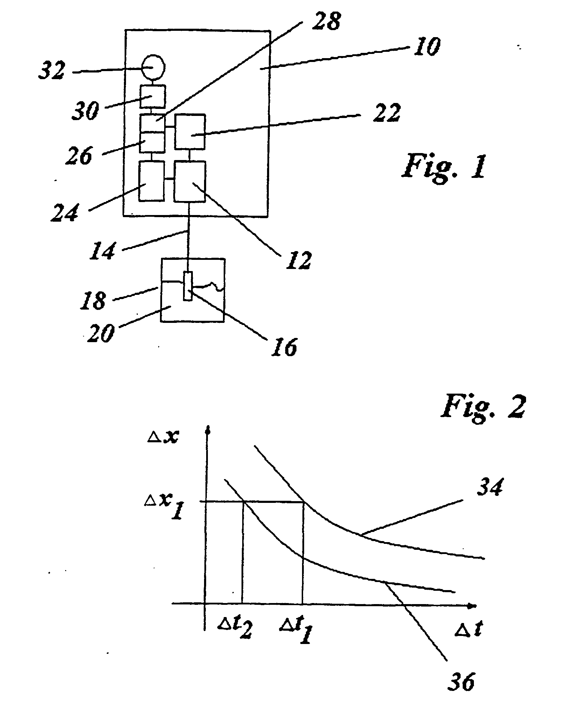

Fig. 1 zeigt ein Analysegerät 10 zur Messung eines Abwasserparameters, z.B. des BOD-Wertes (Biological Oxygen Demand). Das Gerät 10 umfaßt eine Steuereinheit 12, die über eine Signalleitung 14 mit einer Meßsonde 16 verbunden ist, die in eine in einem Probengefäß 18 befindliche Abwasserprobe 20 eingetaucht ist. Die Steuerung 12 enthält ferner einen Zeitmeßbaustein 22, der die Meßperioden steuert, d.h. die zeitlichen Abstände, in denen Messungen durchgeführt werden.

Die von der Meßsonde 16 erhaltenen Meßwerte werden über die Signalleitung 14 der Steuerung 12 und dort einem Speicher und/oder Verarbeitungseinheit 24 zugeführt, wo die Meßwerte entweder gespeichert oder ausgewertet werden. Die Meßwerte werden weiterhin einer Differenzschaltung 26 zugeführt, die aus aufeinanderfolgenden Meßwerten x Meßwertdifferenzen Δx bildet. Diese gebildeten Meßwertdifferenzen werden an eine Vergleichsschaltung 28 weitergeleitet, die mit einem Referenzwertspeicher 30 verbunden ist. In dem Referenzwertspeicher 30 sind Zuordnungstabellen oder Funktionen gespeichert, wie sie z.B. in Fig. 2 dargestellt sind. Die Zuordnungsfunktionen oder Zuordnungstabellen ordnen einer bestimmten Meßwertdifferenz Δx oder einem Ableitungswert dx/dt ein zugeordnetes Meßintervall Δt zu. In der Vergleichsschaltung wird der in der Differenz- oder Differenzschaltung ermittelte Differenzwert Δx mit der Kennlinie oder der Funktion im Referenzwertspeicher 30 verglichen und daraus das zugeordnete Meßintervall bestimmt. Dieser Wert wird dem Zeitmeßbaustein 22 zugeleitet, welcher wiederum die Meßintervalle, d.h. die zeitlichen Abstände zwischen den Messungen einstellt.

Der Referenzwertspeicher 30 ist ferner mit einer Uhr 32 verbunden, die bewirkt, daß in dem Referenzwertspeicher in Abhängigkeit von der Jahreszeit, dem Wochentag oder der Tageszeit unterschiedliche abgespeicherte Kennlinien verwendet werden.

Fig. 2 zeigt so z.B. eine Kennlinie 34 für einen Feiertag, bei dem erwartungsgemäß geringere Schwankungen im Abwasseranfall auftreten als an Wochentagen. Daher führt dort eine bestimmte Meßwertdifferenz Δx1 zu einem recht langen Meßintervall. An Werktagen wird in dem Referenzwertspeicher 30, gesteuert durch die Uhr 32, automatisch eine andere Kennlinie 36 geladen, die bei derselben Meßwertdifferenz Δx1 zu einem wesentlich kürzeren Meßintervall Δt2 führt. Entsprechend unterschiedliche Kennlinien lassen sich auch über die Jahreszeiten oder Tageszeiten einspeichern und steuern.

Statt einfacher Meßwertdifferenzen, bei denen der letzte Meßwert vom vorletzten Meßwert abgezogen wird, können auch unter Berücksichtigung der Meßintervalle erste Ableitungen der Meßwerte nach der Zeit verwendet werden.

In einer äußerst einfachen Ausbildung der Erfindung können auch lediglich die Meßwertdifferenzen zur Einstellung des Meßintervalls verwendet werden, insbesondere solange das Meßintervall nicht verändert wird. Die Verwendung allein der Meßwertdifferenzen bei konstantem oder sich nur gering änderndem Meßintervall berücksichtigt somit ebenso den zeitlichen Abstand der Messungen.

## Patentansprüche

1. Verfahren zur Messung von Wasser- und Abwasserparametern, **dadurch gekennzeichnet, daß** aus den Meßwerten von wenigstens zwei sukzessiven Messungen, unter Berücksichtigung des zeitlichen Abstandes der Messungen, die zeitliche Änderung bzw. erste Ableitung des Meßwertverlaufs bestimmt wird, und daß das Meßintervall bis zur nächsten Messung in Abhängigkeit von dem Wert dieser zeitlichen Änderung bzw. ersten Ableitung festgesetzt wird.

2. Verfahren nach Anspruch 1,
**dadurch gekennzeichnet,**
**daß** das Meßintervall so eingestellt wird, daß die erhaltene Differenz zwischen den Meßwerten sukzessiver Messungen innerhalb festgelegter Ober- oder Untergrenzen bleibt oder einer abgespeicherten Zuordnungsfunktion entspricht.

3. Verfahren nach Anspruch 1,
**dadurch gekennzeichnet,**
**daß** der erhaltene Wert der zeitlichen Meßwertänderung bzw. ersten Ableitung mit einer Zuordnungsfunktion verglichen wird, die diesem Wert ein korrelierendes Meßintervall zuordnet.

4. Verfahren nach einem der vorhergehenden Ansprüche,
**dadurch gekennzeichnet,**
**daß** durch den Wert der zeitlichen Änderung bzw. ersten Ableitung von Meßwerten die Länge eines eingespeicherten Grundintervalls variiert wird.

5. Verfahren nach Anspruch 4,
**dadurch gekennzeichnet,**
**daß** das Grundintervall entsprechend dem tageszeitlichen oder dem zeitlichen Verlauf innerhalb eines Zeitraums z.B. einer Woche manuell oder durch eine Programmsteuerung eingestellt wird.

6. Analysegerät für Wasser- bzw. Abwasserparameter, welches in zeitlichen Abständen den Parameter bestimmt,
wobei das Gerät (10) folgende Merkmale aufweist:
- eine Differenzschaltung (26), die aus der Differenz (Δx) aufeinanderfolgender Meßwerte einen Differenzwert bildet,
- eine Vergleichsschaltung (28), die den erhaltenen Differenzwert mit einer in einem Referenzwertspeicher (30) abgelegten Zuordnungsfunktion oder Zuordnungstabelle vergleicht und einen aus der Zuordnungsfunktion erhaltenen Wert für das Meßintervall einem Zeitmeßbaustein (22) zuführt, durch welchen ein Meßvorgang initiierbar ist, und
- bei dem die Differenzschaltung (26) die Differenz (Δx) aufeinanderfolgender Meßwerte durch einen dem zeitlichen Abstand (Δt) der Messungen entsprechenden Wert dividiert und den differenzierten Wert als Differenzwert an die Vergleichsschaltung (28) weiterleitet.

7. Analysegerät nach Anspruch 6,
**dadurch gekennzeichnet,**
**daß** eine Schaltung vorgesehen ist, die in Abhängigkeit von der Höhe des erhaltenen Intervallwertes ein als Grundintervall gespeichertes Meßintervall verändert und dem Zeitmeßbaustein (22) zuführt.

8. Analysegerät nach einem der Ansprüche 6 bis 7,
**dadurch gekennzeichnet,**
**daß** eine Schaltung (28-32) vorgesehen ist, die ein als Grundwert gespeichertes Meßintervall in Abhängigkeit von der Tages-und/oder Jahreszeit verändert.

## Claims

1. A process for analyzing water and wastewater parameters **characterized in that** the change in time or first derivation of the sampling profile is determined from the sample values of at least two consecutive samples in taking into account the sampling time intervals and that the sampling interval is defined up to the next sample as a function of the value of this change in time or first derivation.

2. The process as set forth in claim 1, **characterized in that** the sampling interval is timed so that the resulting difference between the sample values of consecutive samples remain within defined MAX/MIN limits or corresponding to a memorized assignment function.

3. The process as set forth in claim 1, **characterized in that** the value of the change in the sample value with time or first derivation is compared to an assignment function which assigns this value a correlating sampling interval.

4. The process as set forth in any of the preceding claims, **characterized in that** the duration of a memorized basic interval is varied by the the value of the change in the sample value with time or first derivation of sample values.

5. The process as set forth in claim 4, **characterized in that** the basic interval is timed in accordance with the profile for the time of day or within a period of time, e.g. a week, manually or by a program controller.

6. An analyzer for analyzing water and wastewater parameters which determines the parameter in time intervals, the analyzer (10) comprising the following features:
- a differentiator (26) forming a difference value from the difference (Δx) of consecutive sample values,
- a comparator (28) which compares the resulting difference value to an assignment function or assignment table memorized in a reference value memory (30) and forwards a value obtained from the assignment function for the sampling interval to a timer (22) by which a sampling action can be initiated, and
- in which the differentiator (26) divides the difference (Δx) of consecutive sample values by a value corresponding to the time interval (Δt) of the samples and forwards the differentiated value as the difference value to the comparator (28).

7. The analyzer as set forth in claim 6, **characterized in that** a circuit is provided which alters a sampling interval memorized as the basic interval as a function of the level of the obtained interval value and forwards it to the timer (22).

8. The analyzer as set forth in claim 6 or 7, **characterized in that** a circuit (28-32) is provided which alters a sampling interval memorized as a basic value as a function of the time of day and/or time of year.

## Revendications

1. Procédé pour mesurer les paramètres d'eau et d'eaux usées, **caractérisé en ce qu'**à partir des valeurs de mesure d'au moins deux mesures successives, en prenant en compte la distance temporelle des mesures, on détermine la modification temporelle, respectivement la première dérivée du déroulement de la valeur de mesure, et
**caractérisé en ce que** l'intervalle de mesure jusqu'à la prochaine mesure est déterminé en liaison avec la valeur de cette modification temporelle, respectivement la première dérivée.

2. Procédé selon la revendication 1, **caractérisé en ce que** l'intervalle de mesure est réglé d'une manière à conserver la distance obtenue entre les valeurs de mesure des mesures successives à l'intérieur de limités supérieures ou inférieures déterminées ou de manière à ce que l'intervalle corresponde à une fonction de correspondance stockée.

3. Procédé selon la revendication 1, **caractérisé en ce que** la valeur obtenue de la modification de la valeur de mesure du temps, respectivement la première dérivée, puisse être comparé avec une fonction de correspondance qui associe à cette valeur un intervalle de mesure corrélant.

4. Procédé selon une des revendications précédentes, **caractérisé en ce qu'**on peut varier la longueur d'un intervalle de base stocké grâce à la valeur de la modification du temps, respectivement la première dérivée des valeurs de mesure.

5. Procédé selon la revendication 4, **caractérisé en ce que** l'intervalle de base est réglé de façon manuelle ou par une commande par logiciel selon le déroulement temporel de la journée ou le déroulement temporel à l'intérieur d'une période de temps, par exemple, durant une semaine.

6. Appareil d'analyse pour les paramètres d'eau, respectivement des eaux usées, qui détermine les paramètres selon des distances temporelles ; l'appareil (10) présentant les caractéristiques suivantes :
- un circuit différentiel (26) qui, à partir de la différence (Δx) de valeurs de mesure qui se suivent, forme une valeur différentielle,
- un circuit de comparaison (28) qui compare la valeur différentielle obtenue avec une fonction de correspondance ou un tableau de correspondance mémorisées dans une mémoire de valeurs de référence (30) et conduit une valeur obtenue à partir de la fonction de correspondance à un élément de mesure de temps (22) pour l'intervalle de mesure, à travers lequel élément de mesure de temps, il est possible de commencer un processus de mesure, et
- pour lequel élément de mesure de temps, on divise la différence (Δx) de valeurs de mesure qui se suivent par une valeur correspondant à l'intervalle temporel (Δt) des mesures et la valeur différentiée est transmise ultérieurement en tant que valeur différentielle au circuit de comparaison (28).

7. Appareil d'analyse selon la revendication 6, **caractérisé en ce qu'**on a prévu un circuit qui modifie un intervalle de mesure stocké en tant qu'intervalle de base en fonction de la hauteur de la valeur d'intervalle obtenue et conduit ledit intervalle à l'élément de mesure de temps (22).

8. Appareil de mesure selon une des revendications 6 à 7, **caractérisé en ce qu'**on a prévu un circuit (28-32) qui modifie un intervalle de mesure mémorisé en tant que valeur de base en fonction de l'heure et/ou de la saison.
